# EUROPÄISCHE PATENTSCHRIFT

(11) **EP 0 462 922 B1**
(45) Veröffentlichungstag und Bekanntmachung des Hinweises auf die Patenterteilung: **25.08.1993**
(21) Anmeldenummer: 91710021.6
(22) Anmeldetag: 03.06.1991
(51) Int. Cl.: B60N 2/48

(54) **Kopfstütze für Kraftfahrzeugsitze**
Headrest for car seat
Appui-tête pour siège de véhicule automobile

(30) Priorität: 16.06.1990 DE 4019302; 28.05.1991 DE 4117348
(43) Veröffentlichungstag der Anmeldung: 27.12.1991
(73) Patentinhaber: PETER BUTZ GmbH & Co Verwaltungs-KG, 40764 Langenfeld (DE)
(72) Erfinder: Butz, Eugen Otto, D-4010 Hilden (DE)
(74) Vertreter: Ostriga, Harald

(56) Entgegenhaltungen:
- DE-A- 1 938 253
- DE-A- 2 120 807
- DE-A- 2 927 702
- DE-A- 3 246 342
- FR-A- 2 271 067
- US-A- 4 844 544
- US-A- 4 882 807

## Beschreibung

Die Erfindung betrifft eine Kopfstütze für Kraftfahrzeugsitze entsprechend den Merkmalen des Oberbegriffs des Anspruchs 1. Eine solche Kopfstütze ist durch die DE-C- 2 120 807 (C3) bekanntgeworden.

Das Grundprinzip der bekannten Kopfstütze, nämlich die Neigeverstellarretierung des Polsterträgers mittels einer Klemmlagerschelle, ist bis auf den heutigen Tag gebräuchlich. Die Klemmlagerschelle ist im Innenraum des Polsterträgers formschlüssig aufgenommen. Hierbei umgreift die kreiszylindrische Innenmantelfläche der Schelle die Neigeachse, die als Abwinkelung des freien Endes der jeweils aus Rundstahl bestehenden Tragstange einen kreiszylindrischen Zapfen bildet.

Der kreiszylindrische Bereich der bekannten Klemmlagerschelle ist schlitzrohrförmig ausgebildet. Beidseitig des Schlitzes ragen etwa im Parallelabstand zueinander zwei Klemmschenkel quer nach außen, welche gemeinsam mit dem sie umgebenden Polsterträger von einer Klemmschraube quer durchsetzt sind, die je nach Zustellung ein mehr oder weniger großes Hemmoment liefert.

Bei der durch die DE-C- 2 120 807 bekannten Kopfstütze geschieht der Zusammenbau von Polsterträger und Tragstangen mit Neigeverstelleinrichtung derart, daß zunächst beide Klemmlagerschellen in die polsterträgerseitigen Formschlußaufnehmen eingelegt, sodann die Klemmschrauben eingesetzt und die Klemmuttern locker befestigt werden, worauf das jeweilige abgewinkelte Tragstangenende in die betreffende zylindrische Innenmantelfläche des klemmschellenseitigen Schlitzrohrbereichs eingesetzt wird. Schließlich erfolgt das Festziehen der Klemmschrauben unter genauer Beachtung eines vorbestimmten Anzugs-Drehmomentes.

Die vorbeschriebene Montageweise der bekannten Kopfstütze wird inzwischen als zu zeitaufwendig und auch darüber hinaus als verbesserungsbedürftig empfunden.

Bei der Entwicklung einer besseren Lösung sollte zudem eine Möglichkeit wahlweise nicht ausgeschlossen werden, bei welcher die Neigeverstelleinrichtung gemeinsam mit den Tragstangen so weit wie möglich vormontiert und als weitestgehend selbständige Baugruppe in den Polsterträger eingeführt werden kann. Eine solche Anregung ist der DE-C- 3 435 478 (C2) zu entnehmen (vgl. dort Sp. 6 Z. 19-68 sowie Sp. 7 Z. 1-23). Entsprechend jener bekannten Kopfstütze werden beide Tragstangen gemeinsam mit ihren die Neigeachsen darstellenden Tragstangenaufsätzen im Wege einer Einschubmontage mit unlösbarer Schnappverrastung in Formschluß-Rastaufnahmen des hohlen Polsterträgers eingeführt. Indes ist auch die von der DE-C- 3 435 478 bekannte Kopfstütze hinsichtlich ihrer Montageweise noch unvollkommen. Dieses deshalb, weil - ebenso wie beim Gegenstand der eingangs erwähnten DE-C- 2 120 807 - die konstruktiven und werkstoffbedingten Eigenschaften des Polsterträgers den Wert des erforderlichen Hemmomentes maßgeblich mitbestimmen. Also können Fertigungs- und Werkstofftoleranzen die Qualität der Neigeverstellung erheblich beeinträchtigen.

Die unmittelbare konstruktive Verknüpfung der Hemmvorrichtung mit dem Polsterträger hinsichtlich der Höhe des Hemmomentes und der Art und Weise, wie das Hemmoment erzielt wird, ist beispielsweise auch bei einer anderen vorbekannten Kopfstütze gemäß der DE-A- 1 938 253 (A1) (s. dort Fig. 1 und 2 Pos. 1, 3, 4, 5, 6, 8) relevant. Bei jener bekannten älteren Kopfstütze ist der Polsterträger noch recht rudimentär als Bügel (Pos. 1) ausgebildet, welcher das eigentliche Kopfpolster (Pos. 2) trägt. Die Hemmvorrichtung selbst dieser bekannten Kopfstütze arbeitet nach dem Prinzip einer Reibungskupplung mit radial und koaxial zur geometrischen Neigeachse angeordneten Reibbelag- Scheiben.

Auch bei einer weiteren vorbekannten Kopfstütze (EP-A-0 254 808) sind die Höhe des Hemmomentes sowie die Art, wie das Hemmoment mittels Reibscheiben erzielt wird, unmittelbar von den konstruktiven Eigenarten des Polsterträgers diktiert (s.a.a.O. S. 4 Z. 10-22 sowie S. 7 Z. 15-29).

Ausgehend von der eingangs beschriebenen bekannten Kopfstütze (DE-C-2 120 807), liegt der Erfindung die Aufgabe zugrunde, bauliche Voraussetzungen für eine einfache und rasche Montageweise zu schaffen und zugleich die Qualität hinsichtlich der Einstellung des jeweils erforderlichen Hemmomentes zu verbessern.

Entsprechend der Erfindung wird diese Aufgabe dadurch gelöst, daß die Hemmvorrichtung aus einer an der Neigeachse vormontierbaren Baueinheit besteht, deren mindestens eines Hemmbauteil hinsichtlich seines Hemmomentes mittels eines Kraftaufnahmeelementes endgültig eingestellt bzw. endgültig einstellbar ist, wobei das Kraftaufnahmeelement mit dem Hemmbauteil baulich integriert und von der formschlüssigen Aufnahme des Hemmbauteils im oder am Polsterträger unabhängig ist, wobei die Hemmvorrichtung ein am Polsterträger drehfest, wie beispielsweise formschlüssig, gehaltenes, mit dem Polsterträger neigebewegliches Primärteil und ein hierzu mit der Neigeachse raumfestes oder von der Neigeachse raumfest gebildetes Sekundärteil aufweist und wobei mindestens eine Kupplungsfläche des Primärteils, die Primärkupplungsfläche, und mindestens eine Kupplungsfläche des Sekundärteils, die Sekundärkupplungsfläche, unter Ausschluß einer Verstell- oder Befestigungsfunktion des Polsterträgers reibschlüssig und gegebenenfalls auch formschlüssig über das Kraftaufnahmeelement mit einer fest einstellbaren bzw. fest eingestellten Normalkraft gegeneinander gehalten sind.

Die Erfindung ermöglicht eine Hemmvorrichtung mit einem Hemmbauteil, welches eine an der Neigeachse vormontierbare Baueinheit ist und ein integriertes Kraftaufnahmeelement aufweist, über welches die für das Hemmmoment maßgebliche Kraft in das Hemmbauteil eingeleitet wird. Die Einstellung der das Hemmoment bildenden Normalkraft ist unabhängig vom Polsterträger und wird von diesem nicht behindert. Die erfindungsgemäße Hemmvorrichtung enthält sämtliche für eine Neigeverstellung erforderlichen Funktionselemente. Die erfindungsgemäße Hemmvorrichtung ist deshalb hinsichtlich der Einstellung des Hemmomentes völlig autark, also auch funktionell unabhängig von etwaigen - z.B. durch Fertigungstoleranzen bedingten - schädlichen Einflußgrößen des Polsterträgers.

Die integrierte Bauweise des Kraftaufnahmeelementes mit dem Hemmbauteil erbringt unter anderem folgende wesentliche Vorteile:

Das dem Hemmbauteil aufzuprägende Hemmoment kann extern, also räumlich separat und unabhängig vom Polsterträger, eingestellt werden. Hierdurch werden die Voraussetzungen sowohl für eine rationellere Einstellung des Hemmomentes als auch für einfachere Montagevorrichtungen geschaffen, da Besonderheiten des Polsterträgers nicht berücksichtigt zu werden brauchen.

Weiterhin bietet die Erfindung die Möglichkeit einer völlig fertigen Montagegruppe, die sich aus Tragstangenaufsätzen (welche die zapfenförmigen Neigeachsen bilden) und Hemmvorrichtungen zusammensetzt und welche fakultativ bei bestimmten Anwendungen auch die Tragstangen beinhalten kann. Eine solche Montageeinheit kann auf dem Weg einer einfachen Einschub-Montagebewegung in den Polsterträger eingeführt und dort verrastet werden. Dieses kann in vorteilhafter Weise geschehen, ohne daß - wie beim Gegenstand der DE-C- 3 435 478 - zusätzliche Manipulationen zur Vollendung der Neigeverstelleinrichtung erforderlich wären.

Ein ganz erheblicher Vorteil der Erfindung besteht darin, daß sowohl durch Fertigungs- als auch durch unterschiedliche Werkstoffchargen bedingte Werkstofftoleranzen des Polsterträgers keinen Einfluß mehr auf die Höhe des einzustellenden Hemmomentes haben, Dadurch, daß nämlich die Einstellung des Hemmomentes des Hemmbauteils unabhängig vom Polsterträger extern erfolgt, sind die ansonsten polsterträgerseitig einfließenden, die Höhe des Hemmomentes verfälschenden, Toleranzen von vorn herein eliminiert.

Mit der Erfindung ist es zudem möglich geworden, in der Fertigungsfolge zuerst Polsterträger zu umschäumen und nachträglich erfindungsgemäß vormontierte Baueinheiten in vom Schaum weitestgehend freigehaltene polsterträgerseitige Rast-Aufnahmeräume formschlüssig einzubringen. Wegen der beim Stand der Technik vorhandenen vorbeschriebenen engen konstruktiven Verknüpfung des Polsterträgers mit der Neigeverstellvorrichtung mußte nämlich letztere bereits vor dem Umschäumen des Polsterträgers in diesem enthalten sein. Dies führte zu erheblichen Schwierigkeiten und zu zusätzlichen Maßnahmen, mit denen ein Eindringen der reaktiven expandierenden Schaumflüssigkeit in den polsterträgerseitigen inneren Verstellhohlraum hinein bis zu den Hemmelementen hin verhindert werden mußte, Diese Schwierigkeiten, die in der DE-C- 3 818 018 (C1) geschildert sind, werden mit der Erfindung sämtlich überwunden,

Darüber hinaus gestattet es die Erfindung, anstelle des Umschäumens z.B, ein Fertigschaumteil oder gegebenenfalls zwei oder mehrschalige Fertigbauteile am Polsterträger mechanisch oder adhäsiv in automatischer Fertigungsweise zu befestigen, ohne daß etwa wie beim Bekannten zuvor angebrachte Neigeverstelleinrichtungen die automatisierte Fertigung behindern.

Eine vorteilhafte grundsätzliche Ausführungsform entsprechend der Erfindung besteht darin, daß die Hemmvorrichtung ein am Polsterträger drehfest, wie formschlüssig od.dgl., gehaltenes, mit dem Polsterträger neigebewegliches, Primärteil und ein hierzu mit der Neigeachse raumfestes oder von der Neigeachse raumfest gebildetes Sekundärteil aufweist, wobei mindestens eine am Primärteil drehfeste Kupplungsfläche, die Primärkupplungsfläche und mindestens eine am Sekundärteil drehfeste Kupplungsfläche, die Sekundärkupplungsfläche, unter Ausschluß einer Verstell- oder Befestigungsfunktion des Polsterträgers reibschlüssig und gegebenenfalls auch formschlüssig über das Kraftaufnahmeelement mit einer fest einstellbaren bzw. fest eingestellten Normalkraft gegeneinander gehalten sind.

Weitere Ausgestaltungen der Erfindung ergeben sich aus den Unteransprüchen.

In den Zeichnungen sind bevorzugte Ausführungsbeispiele entsprechend der Erfindung näher dargestellt, es zeigt:
Fig. 1 eine mehr schematische, teilweise geschnittene hälftige Ansicht einer das Erfindungsprinzip grundsätzlich wiedergebenden Kopfstütze,
Fig. 2 eine abgewandelte Ausführungsform als Ersatz für den in Fig. 1 geschnitten dargestellten Bereich unter Einbeziehung von Teilbereichen des Polsterträgers,
Fig. 3 in der Darstellungsweise gemäß Fig. 2 eine Variante,
Fig. 4 und 5 eine mehr ins einzelne gehende Darstellung des beispielsweise in Fig. 1 dargestellten Bauprinzips, wobei Fig. 4 einen bezüglich Fig. 1 um 90° umfangsversetzten Teilschnitt darstellt, während Fig. 5 ein Vertikalschnitt entsprechend der in Fig. 4 mit IV-IV bezeichneten Schnittlinie ist,
Fig. 6 eine Variante des aus den Fig. 4 und 5 ersichtlichen Hemmbauteils (Klemmlagerschelle),
Fig. 7 eine Weiterentwicklung der in den Fig. 2 und 3 dargestellten Bauformen in ähnlicher Darstellungsweise, ebenfalls mit Teilbereichen des Polsterträgers,
Fig. 8 eine hälftige Ansicht einer mit einer Art Hirth-Verzahnung versehenen isoliert dargestellten Lochscheibe etwa in Blickrichtung des mit VIII bezeichneten Pfeils in Fig. 7,
Fig. 9 und 10 zwei weitere Varianten der in Fig. 7 dargestellten Bauform, wobei die Teilbereiche des Polsterträgers nicht gezeigt sind,
Fig. 11 entsprechend dem mit XI bezeichneten Ansichtspfeil in Fig. 9 in isolierter Darstellung einen als Axialsicherung für ein Kraftaufnahmeelement vorgesehenen Seeger-Ring,
Fig. 12 eine Stirnansicht eines Primärteils mit besonders ausgestalteter Lochscheibe und
Fig. 13 einen Radialschnitt durch das Primärteil entsprechend der Schnittlinie XIII-XIII in Fig. 12.

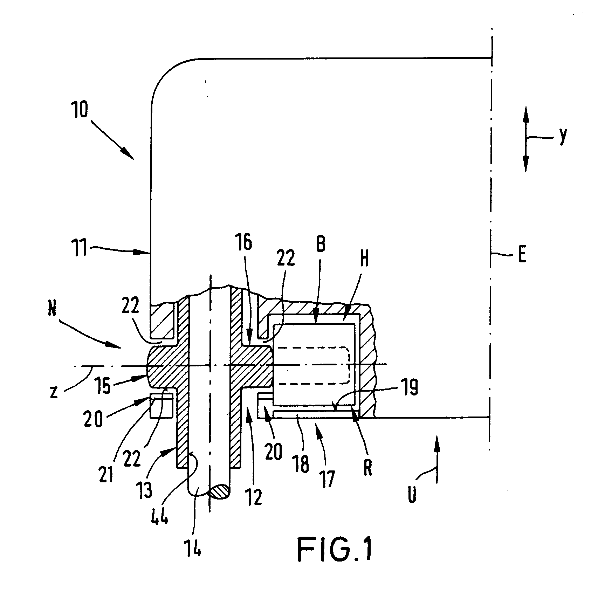

In Fig. 1 ist eine ohne Kopfpolster hälftig dargestellte Kopfstütze mit der Bezugsziffer 10 bezeichnet. Hierzu gehört ein innen zumindest teilweise hohl ausgebildeter Polsterträger 11, der mit einem von unten offenen Schacht 12 zur Aufnahme eines Tragstangenaufsatzes 13 versehen ist. Der Tragstangenaufsatz 13 ist in Höhenrichtung gemäß dem Doppelpfeil y auf der Tragstange 14 gleitbar und kontinuierlich oder stufenweise, letzteres beispielsweise mittels Rastkerben und einer Rastfeder, in gewünschter Höhenlage arretierbar.

Der Tragstangenaufsatz 13 weist einen äußeren Drehzapfen 15 und einen zur Kopfstützenmittelebene E weisenden, durch die geometrische Neigeachse Z gehenden, kreiszylindrischen Zapfen 16 auf, der, wie gestrichelt dargestellt ist, in ein Hemmbauteil B eingreift, welches gemeinsam mit dem kreiszylindrischen Zapfen 16 die insgesamt mit H bezeichnete Hemmvorrichtung bilden kann.

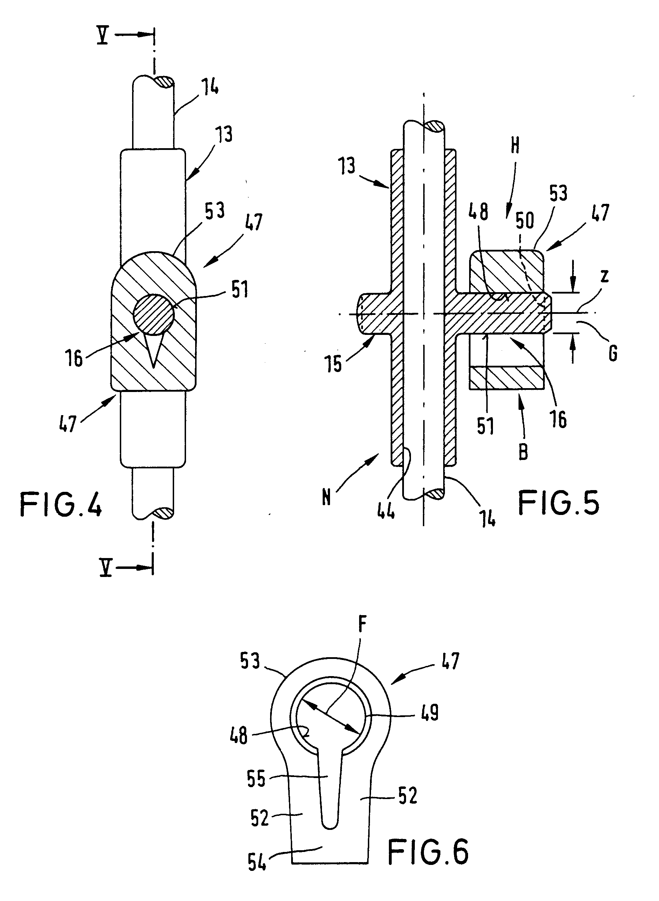

Das Hemmbauteil B könnte beispielsweise als in den Fig. 4-6 dargestellte Klemmlagerschelle 47 ausgebildet sein.

Die Tragstange 14 ist beim gezeigten Ausführungsbeispiel in einer nicht dargestellten Kraftfahrzeug-Sitzlehne herausnehmbar befestigt. Es ist auch denkbar, daß die Tragstange 14 unverschieblich im Tragstangenaufsatz 13 aufgenommen ist oder daß der kreiszylindrische Zapfen 16 von einer nach E weisenden endseitigen Abwinklung der Tragstange 14 selbst gebildet ist. In solchen letztgenannten Fällen sind die beiden Tragstangen 14 der Kopfstütze 10 innerhalb der Kraftfahrzeug-Sitzlehne höhenverstell- und arretierbar.

Das Hemmbauteil B ist innerhalb einer polsterträgerseitigen Rastaussparung R formschlüssig (etwa käfigförmig) derart verrastet, daß eine Lageveränderung des einmal eingebauten Hemmbauteils B praktisch unmöglich ist. Hierzu kann z.B. mindestens eine nur schematisch angedeutete polsterträgerseitige Rastrippe 17 mit einer Anlaufschräge 18 und einer Widerlagerfläche 19 dienen. Ähnliche Rastrippen 20 mit Anlaufschrägen 21 und Widerlagerflächen 22 sind unterhalb der Zapfen 15, 16 angeordnet.

Vor der Montage der in Fig. 1 gezeigten Kopfstütze 10 befinden sich der Tragstangenaufsatz 13, die Tragstange 14 sowie das Hemmbauteil B - ansonsten in der Konfiguration gemäß Fig. 1 - außerhalb des Polsterträgers 10. Zuvor wurde das Hemmoment des Hemmbauteils B in geforderter bestimmter Höhe eingestellt, so daß die insgesamt mit N bezeichnete Neigeverstelleinrichtung, bestehend aus den Bauteilen 13, 14 und B, hinsichtlich aller Parameter der Neigeverstellarretierung komplett ist. Die hinsichtlich ihrer Neigeverstellfunktionen fertige Neigeverstelleinrichtung N wird nun von unten her in Einschubrichtung U in den raumfest gehaltenen Polsterträger 11 so weit eingeschoben, bis die Zapfen 15, 16 über die Rastrippen 20 und das Hemmbauteil B über entsprechende Rastrippen 17 hinweggelangt und die Zapfen 15, 16 in den Drehlageröffnungen 22 sowie das Hemmbauteil B in der Rastaussparung R praktisch unlösbar verrastet sind.

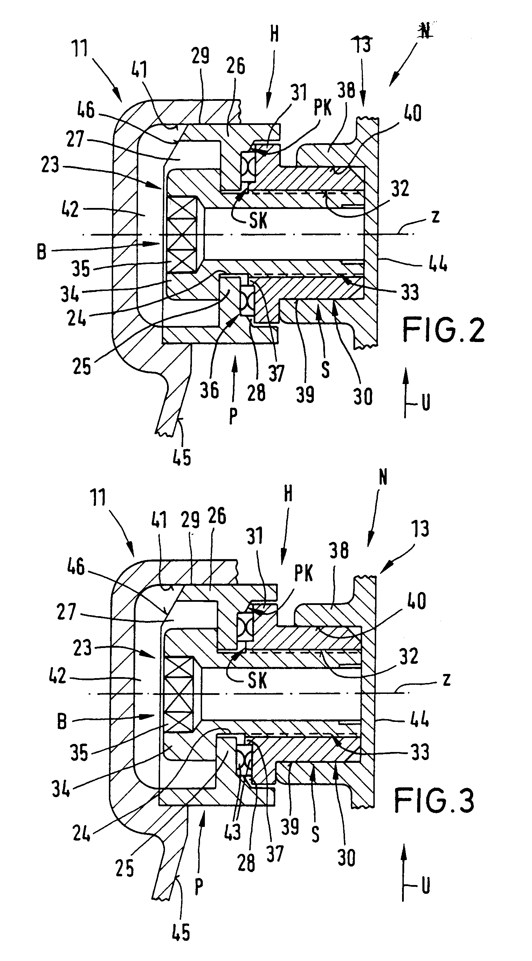

Die in den Fig. 2 und 3 dargestellten Ausführungsformen sind weitestgehend baugleich, mit dem Unterschied, daß die Ausführungsform gemäß Fig. 2 im wesentlichen als reibschlüssige Hemmvorrichtung und die Ausfürungsform gemäß Fig. 3 im wesentlichen als formschlüssige Hemmvorrichtung arbeitet. Die Einzelbauteile der Ausfürungsformen gemäß Fig. 2 und 3 sind daher wegen ihrer weitestgehenden Identität identisch bezeichnet.

Vom Tragstangenaufsatz 13 ist in Fig. 2 nur ein Teil dargestellt, ebenso wie vom Polsterträger 11.

Die Hemmvorrichtung H gemäß Fig. 2 weist ein Primärteil P und ein Sekundärteil S auf.

Ein zentraler Gewindehohlbolzen, welcher ein Kraftaufnahmeelement darstellt, ist mit 23 bezeichnet.

Das Primärteil P ist etwa scheibenradförmig gestaltet und weist eine mit einer zentralen Öffnung 24 versehene Lochscheibe 25 auf, welche außenumfangsseitig von einem unrunden, eine Vierkant- oder Sechskant-Schlüsselfläche 29 aufweisenden, in beiden Axialrichtungen vorstehenden Doppelringbereich 26 umgeben ist. Letzterer begrenzt auf seiner dem Polsterträger 11 zugewandten Seite eine Höhlung 27 und auf seiner dem Tragstangenaufsatz 13 zugewandten Seite eine Höhlung 28.

Das Sekundärteil S ist insgesamt etwa flanschbuchsenartig ausgebildet, d.h. es weist einen Buchsenbereich 30 und einen Flanschbereich 31 auf.

Die zur Höhlung 28 hinweisende primärteilseitige Radialfläche bildet die Primärkupplungsfläche PK und die Außenfläche des Flanschbereichs 31 die Sekundärkupplungsfläche SK. Beide Kupplungsflächen PK und SK werden mittels des Gewindehohlbolzens 23 entlang der geometrischen Neigeachse z mit einer ein definiertes Hemmoment erzeugenden Axialkraft gegeneinandergezogen. Hierzu sind das Sekundärteil S mit einem Innengewinde 32 und der Gewindehohlbolzen 23 mit einem Außengewinde 33 versehen. Zur Schraubbetätigung weist der Kopf 34 des Gewindehohlbolzens 23 einen Innensechskant 35 auf.

Zur Verstärkung des Hemmoments zwischen der Primärkupplungsfläche PK und der Sekundärkupplungsfläche SK ist eine Reibscheibe 36 mittels eines Ringbundes 37 des Sekundärteils S in letzterem zentriert.

Die eigentliche körperliche Neigungsachse des Tragstangenaufsatzes 13 ist von einem achsstummelartigen Vorsprung 38 als Hohlachse ausgebildet, dessen Innensechskantfläche 40 einer Außensechskantumfangsfläche 39 des Sekundärteils S formlich angepaßt ist. Auf diese Weise wird eine Drehsicherung zwischen der Hohlachse 38 und dem Sekundärteil S erzielt, ebenso wie bezüglich der Vier- oder Sechskantaußenfläche 29 des Primärteils P, welche mit einer entsprechenden Innenvierkant- oder Innensechskantfläche 41 einer polsterträgerseitigen Rasthöhlung 42 kooperiert.

Der bauliche Unterschied zwischen den Ausführungsformen gemäß den Fig. 2 und 3 besteht lediglich darin, daß beim Ausführungsbeispiel gemäß Fig. 3 sowohl mit der Primärkupplungsfläche PK als auch mit der Sekundärkupplungsfläche SK jeweils ein entlang der Achsrichtung z elastisches Rastringscheibenelement 43 drehfest verbunden ist. Die sich mit ihren Flanken bzw. Scheitellinien radial zur Neigeachse z erstreckenden einzelnen wellenartigen Rastzähne der Rastringscheiben 43 können so mit einer entsprechenden Rasterteilung ineinandergreifen. Wenn der Polsterträger 11 geneigt werden soll, kann dies nur durch Ausrasten und erneutes Einrasten der beiden axial ineinandergreifenden Rastscheiben 43 geschehen, wobei als Hemmoment ein gewisser Reibungsanteil und die elastische Widerstandskraft der beiden Rastscheiben 43 überwunden werden müssen.

Die Montageweise der Ausführungsform entsprechend den Fig. 2 und 3 ist folgende:

Wie beim Ausführungsbeispiel entsprechend Fig. 1 ist das Hemmoment bei beiden Ausführungsbeispielen gemäß den Fig. 2 und 3 durch Schraubbetätigung des Gewindehohlbolzens 23 fest eingestellt. Es ist vorstellbar, daß anstelle des Gewindehohlbolzens 23 auch ein Niet, beispielsweise auch ein Hohlniet, mit bei der Nietung eingestellter Axialkraft beide Teile P und S gegeneinanderziehen kann und hierbei - beispielsweise mittels einer Umbörtelung - ein Widerlager am Sekundärteil S findet. Die so gestaltete, fest einstellbare oder feste Einstellung des Hemmomentes geschieht, während sich die Hemmvorrichtung H außerhalb des Polsterträgers 11 befindet.

Die Hemmvorrichtung H wird sodann mit ihrem Außensechskant 39 in den Innensechskant 40 der Hohlachse 38 des Tragstangenaufsatzes 13 axial eingeschoben. Auch ist die in den Fig. 2 und 3 nicht dargestellte Tragstange 14 bereits in die Tragstangenaufnahme 44 des Tragstangenaufsatzes 13 eingesetzt, Auf diese Weise ist es wiederum möglich, die aus Hemmvorrichtung H und Tragstangenaufsatz 13 (gegebenenfalls mit Tragstange 14) gebildete Neigeverstelleinrichtung N als vollkommen funktionsfertige Baugruppe entlang der Einschubrichtung U von unten her in den Polsterträger 11 so weit einzuschieben, bis das Primärteil P in der Rasthöhlung 42 des Polsterträgers 11 praktisch unlösbar verrastet ist. Zur Erleichterung der Einschub-Rastmontage bilden der Polsterträger 11 eine Anlaufschräge 45 und als Pendant hierzu das Primärteil P eine Schrägfläche 46. Die Rastmontage wird überdies dadurch ermöglicht, daß der Polsterträger 11 vorzugsweise aus einem geeigneten, begrenzt elastisch nachgiebigen Kunststoff als Kunststoffspritzgußteil gefertigt ist.

Bei der in Fig. 4 und 5 dargestellten Ausführungsform sind alle Bereiche des Polsterträgers 11 aus Gründen einer Zeichnungsvereinfachung weggelassen.

Dort bildet die Hemmvorrichtung H als Primärteil eine Klemmlagerschelle 47. Der Innendurchmesser F der kreiszylindrischen Innenmantefläche 48 des Schellenbereichs 53 ist, wie in Fig. 6 grundsätzlich dargestellt, bei isoliert im ausgebauten Zustand betrachteter Klemmlagerschelle 47 um ein bestimmtes Untermaß kleiner als der Außendurchmesser G des das Sekundärteil bildenden, kreiszylindrischen Lagerzapfens 16.

Wenn nun die Klemmlagerschelle 47 über ihre interne stirnseitige Fase 49 auf den ebenfalls mit einer stirnseitigen Fase 50 versehenen kreiszylindrischen Zapfen 16 aufgepreßt wird, so wird eine Ringspannung zwischen der Innenmantelfläche 48 und der Außenmantelfläche 51 des kreiszylindrischen Lagerzapfens 16 erzeugt, welche für das Hemmoment zwischen der das Hemmbauteil B bildenden Klemmlagerschelle 47 und dem kreiszylindrischen Lagerzapfen 16 maßgeblich ist.

Die Montageweise der aus Tragstangenaufsatz 13, Tragstange 14 und Klemmlagerschelle 47 insgesamt gebildeten Neigeverstelleinrichtung N erfolgt, wie im Zusammenhang mit Fig. 1 beschrieben.

Zur Schaffung eines Kraftaufnahmeelementes, welches die vorbeschriebene Ringspannung zwischen der Innenmantelfläche 48 und der Außenmantelfläche 51 aufrechterhält, sind die beiden sich an den Schellenbereich 53 anschließenden Klemmschenkel 52 über eine endseitig an den Schenkeln 52 vorgesehene Werkstoffbrücke 54 stoffschlüssig miteinander verbunden.

Zur Erzielung einer hinreichenden elastischen Klemmvorspannung ist zwischen der Innenmantelfläche 48 des schlitzrohrförmig ausgebildeten Schellenbereichs 53 und der Werkstoffbrücke 54 auf gesamter verbleibender Länge der beiden Klemmschenkel 52 ein zur Werkstoffbrücke 54 hin etwa keilförmig zulaufender Spalt 55 vorgesehen.

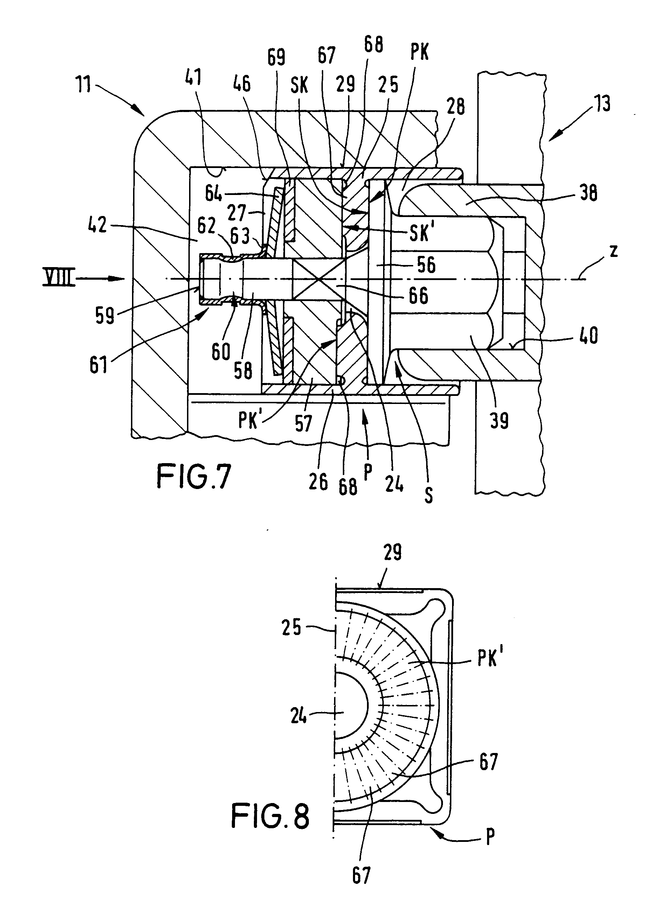

Die in den Fig. 7, 9 und 10 dargestellten Ausführungsvarianten entsprechen grundsätzlich den in den Fig. 2 und 3 gezeigten Ausführungsformen. Weitestgehend analoge Bauteile sind deshalb mit identischen Bezugsziffern versehen.

Gleichermaßen entspricht die Montageweise der in den Fig. 7, 9 und 10 gezeigten Ausführungsvarianten grundsätzlich der vorteilhaften Montageweise, wie im Zusammenhang mit den Ausführungsformen entsprechend den Fig. 2 und 3 geschildert.

Entsprechend den Fig. 7, 9 und 10 weist das Sekundärteil S beiderseits der mit der zentralen Öffnung 24 versehenen Lochscheibe 26 je eine sich an letztere abstützende Kupplungsscheibe, nämlich eine Basisscheibe 56 und eine Gegenscheibe 57 auf.

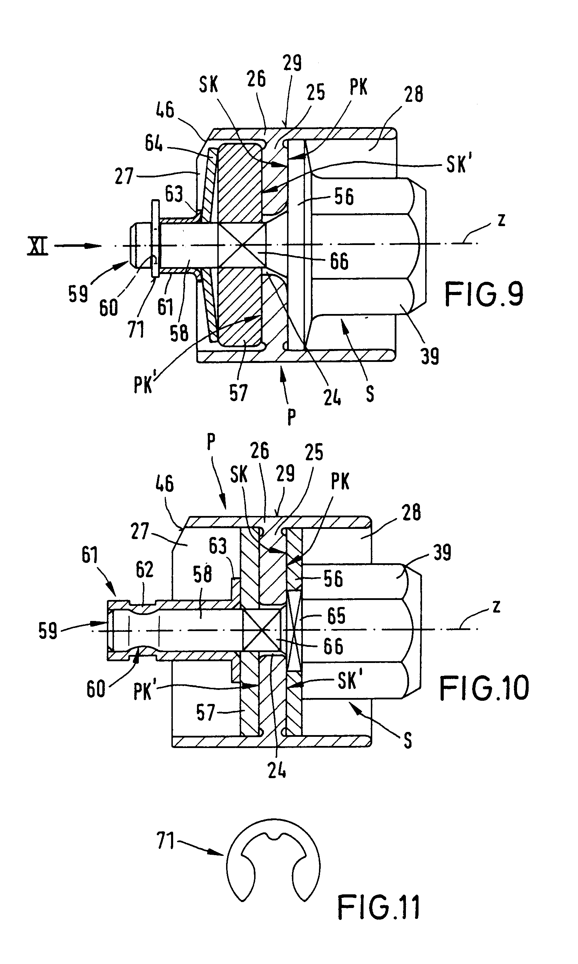

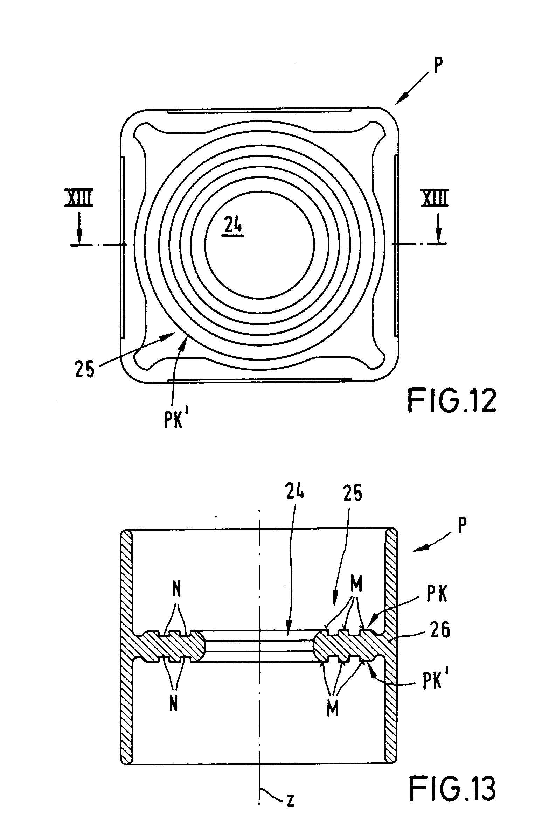

Von der Basisscheibe 56 geht, koaxial zu dieser und einstückig mit dieser verbunden, ein die zentrale Öffnung 24 und die Gegenscheibe 57 durchsetzender wellenstumpfartiger Fortsatz 58 aus. Benachbart seiner freien Endstirnseite 59 besitzt der wellenstumpfartige Fortsatz 58 eine Ringnut 60, welche von einer zylindrischen Hülse 61 übergriffen ist. Gemäß den Fig. 7 und 10 weist Jede Hülse 61 eine bezüglich der Neigeachse z radial nach innen gerichtete wulstartige Einprägung 62 auf, welche die Ringnut 60 ausfüllt. Auf diese Weise ist die zylindrische Hülse 61 fest und axial unverschieblich auf dem wellenstumpfartigen Fortsatz 58 gesichert. Gemäß Fig. 9 geschieht diese axiale Sicherung der Hülse 61 mittels eines Seeger-Ringes 71 (s. auch Fig. 11), der in einer korrespondierenden Ringnut 60 des Fortsatzes 58 lösbar gehalten ist.

Jede zylindrische Hülse 61 weist an ihren der freien Endstirnseite 59 abgewandten Stirnseite einen Flansch 63 auf, mit welchem sie entweder gegen eine Tellerfeder 64 (Fig. 7 und 9) oder unmittelbar gegen die Gegenscheibe 57 drückt.

Die zylindrischen Hülsen 61 sind in sich aufgrund ihrer Werkstoffelastizität (es handelt sich um Hülsen aus zweckmäßigem Metall) entlang der Neigeachse z vorgespannt, derart, daß sie die Basisscheibe 56 mit ihrer Sekundärkupplungsfläche SK gegen die Primärkupplungsfläche PK ziehen. Zugleich drückt jede Hülse 61, was die Gegenscheibe 57 anbelangt, deren Sekundärkupplungsfläche SK' gegen die auf der anderen Radialfläche der Lochscheibe 25 angeordnete Primärkupplungsfläche PK'. Entsprechend dem Ausführungsbeispiel gemäß Fig. 10 geschieht diese Krafteinwirkung unmittelbar, während entsprechend den Ausführungsformen der Fig. 7 und 9 der Flansch 63 der zylindrischen Hülse 61 gegen die Tellerfeder 64 drückt.

Entsprechend den Fig. 7 und 9 ist die Basisscheibe 56, etwa einen Flansch bildend, einstückig mit dem einen Außensechskant bildenden Bereich 39 des Sekundärteils S verbunden.

Nach Fig. 10 stellen die Basisscheibe 56 und das den Außensechskant 39 bildende Bauteil S gesonderte Teile dar. Die Basisscheibe 56 ist jedoch über eine Vierkantanordnung 65 mit dem Sekundärteil S drehfest verbunden. Der wellenstumpfartige Fortsatz 58 weist zudem einen zusätzlichen Außenvierkant 66 auf, der mit einem entsprechenden Innenvierkant (nicht bezeichnet) der Gegenscheibe 57 formschlüssig zusammenwirkt, derart, daß die Gegenscheibe 57 mit dem Fortsatz 58 zwar drehfest gekuppelt, jedoch auch etwa nach Art eines Schiebesitzes auf dem Außenvierkant 66 axial (in Richtung z) verschieblich ist.

Die miteinander korrespondierenden Kupplungsflächenpaare PK, SK; PK', SK' können reibschlüssig und/oder formschlüssig miteinander wirken. So kann beispielsweise etwa in Anlehnung an das Ausführungsbeispiel gemäß Fig. 3 (s. dort Pos. 43) mindestens ein Kupplungsflächenpaar etwa nach Art einer Hirth-Verzahnung in Radialrichtung rastverzahnt sein.

So ist gemäß Fig. 7 die Kupplungsfläche PK' (vgl. ebenfalls die schematische Darstellung in Fig. 8) etwa nach Art einer Hirth-Verzahnung mit sich radial erstreckenden Rastzähnen 67 versehen, welche mit korrespondierenden radial verlaufenden Rastaussparungen 68 der Kupplungsfläche SK' zusammenwirken. Es ist vorstellbar, daß bei einer Neigeverstellung um die Neigeachse z jeweils von Rastzahn zu Rastzahn entgegen der Rückstellkraft der Tellerfeder 64 eine der radialen Rastzahnhöhe entsprechende Axialverschiebung der Gegenscheibe 57 stattfindet.

Selbstverständlich können die Kupplungsflächenpaare PK, SK; PK', SK' mit die Haftreibung erhöhenden Reibbelägen beschichtet sein.

Je nach Auslegung der Varianten kann es auch genügen, lediglich ein Kupplungsflächenpaar, z.B. PK, SK vorzusehen, so daß in diesem Falle die Gegenscheibe 57 entfallen und die zylindrische Hülse 61 sich entweder mittelbar (unter Einschaltung der Tellerfeder 64) oder unmittelbar an der Lochscheibe 25 abstützen würde.

Die Kupplungsteile S und P können unter Einbeziehung der Kupplungsscheiben 56, 57 aus Metall oder aus Kunststoff bestehen. Für den Fall, daß die Gegenscheibe 57 aus Kunststoff besteht, hat es sich als zweckmäßig erwiesen, zwischen der peripheren kanten- bzw. linienartigen Anlagefläche der Tellerfeder 64 und der gegenüberliegenden Radialfläche der Gegenscheibe 57 eine Unterlegscheibe 69 aus Metall anzuordnen.

Die Tellerfedern 64 weisen zweckmäßig eine solche Federcharakteristik auf, daß fertigungs- oder betriebsbedingte (z.B. temperaturbedingte) Axialtoleranzen bei unveränderter Federkraft abgefangen werden. Die für eine Neigeverstellung maßgeblichen Kräfte sind daher in vorteilhafter Weise unabhängig von äußeren Einflüssen stets dieselben. Bei unveränderten Maßen der Hülsen 61 ist in jedem Falle, insbesondere gemäß den Fig. 7 und 9, die axiale Lage der Ringnut 60 maßgeblich für die Vorspannkraft, mit welcher die Kupplungsflächen PK, SK; PK', SK' gegeneinander gehalten werden. Zur Differenzierung der Vorspannkraft ist es entsprechend den Ausführungsformen der Fig. 7 und 9 auch möglich, bei unveränderter Axiallage der Ringnut 60 Hülsen 61 unterschiedlicher Axiallänge einzusetzen.

Entsprechend den Fig. 12 und 13 sind die Kupplungsflächen PK und PK' des Primärteils P in voneinander unabhängige, separate Flächenelemente aufgeteilt, die entsprechend dem dargestellten Beispiel aus drei durchgehend ausgebildeten Kreisringflächen M bestehen, die mittels zweier durchgehend ausgebildeter Kreisringnuten N voneinander in Radialrichtung distanziert sind. Kreisringflächen M und Kreisringnuten N verlaufen koaxial zur Neigeachse z.

Das Primärteil P entsprechend den Fig. 12 und 13 besteht insgesamt aus einem zweckmäßigen Kunststoff, wobei der die Sechskantschlüsselfläche 29 des Primärteils bildende Außenmantelbereich und die Lochscheibe 25 mit den Kupplungsflächen PK, PK' einstückigstoffschlüssig ineinander übergehen. Durch die gesonderten kreisringförmigen Flächenelemente M der aus Kunststoff bestehenden Lochscheibe 25 wird eine nicht erwünschte linienförmige Anlage an den kooperierenden Sekundärkupplungsflächen SK, SK' von Basisscheibe 56 und Gegenscheibe 57 vermieden. Vielmehr sind die Flächenelemente M entsprechend den Ausführungsformen der Fig. 12 und 13 in der Lage, sich unabhängig voneinander an die planebenen Metalloberflächen SK, SK' satt anzulegen. Besonders in Verbindung mit einer Federkraft, beispielsweise einer Tellerfeder 64, bedeutet dies ein gleichbleibendes Hemmoment, welches unabhängig von Temperatureinflüssen und Setzungseigenschaften des Kunststoffes daher im wesentlichen konstant ist.

## Patentansprüche

1. Kopfstütze für Kraftfahrzeugsitze mit einem von einem Kopfpolster umgebenen Polsterträger (11), welcher über mindestens eine sitzlehnenseitig gehaltene Tragstange (14) mit Hilfe einer von der Tragstange gegebenenfalls höhenverstellbar und arretierbar gehaltenen Neigeachse neigeverstellbar gelagert ist, wobei der Polsterträger (11) mit einer ihn bezüglich der Neigeachse zumindest reibschlüssig arretierenden Hemmvorrichtung (H) zusammenwirkt, die mindestens ein Hemmbauteil (B) aufweist, dadurch gekennzeichnet, daß die Hemmvorrichtung (H) aus einer an der Neigeachse (bei z; 16, 38) vormontierbaren Baueinheit besteht, deren mindestens eines Hemmbauteil (B) hinsichtlich seines Hemmomentes mittels eines Kraftaufnahmeelementes (23; 54; 61) endgültig eingestellt bzw. endgültig einstellbar ist, wobei das Kraftaufnahmeelement (23; 54; 61) mit dem Hemmbauteil (B) baulich integriert und von der formschlüssigen Aufnahme (bei R; bei 42) des Hemmbauteils (B) im oder am Polsterträger (11) unabhängig ist, wobei die Hemmvorrichtung (H) ein am Polsterträger (11) drehfest, wie formschlüssig od.dgl., gehaltenes, mit dem Polsterträger (11) neigebewegliches Primärteil (P) und ein hierzu mit der Neigeachse (bei z; 16, 38) raumfestes oder von der Neigeachse (bei z; 16, 38) raumfest gebildetes Sekundärteil (S) aufweist und wobei mindestens eine Kupplungsfläche des Primärteils (P),
die Primärkupplungsfläche (PK; PK'), und mindestens eine Kupplungsfläche des Sekundärteils (S), die Sekundärkupplungsfläche (SK; SK'), unter Ausschluß einer Verstell- oder Befestigungsfunktion des Polsterträgers (11) reibschlüssig und gegebenenfalls auch formschlüssig über das Kraftaufnahmeelement (23, 54; 61) mit einer fest einstellbaren bzw. fest eingestellten Normalkraft gegeneinander gehalten sind.

2. Kopfstütze nach Anspruch 1, dadurch gekennzeichnet, daß Primärteil (P), Sekundärteil (S) und Neigeachse (bei z; 16, 38) gemeinsam mit den zugehörigen Kupplungsflächen (PK, SK; PK', SK') koaxial zueinander angeordnet sind.

3. Kopfstütze nach einem der vorangehenden Ansprüche, dadurch gekennzeichnet, daß sich die Kupplungsflächen (PK, SK; PK', SK') im wesentlichen radial zur Neigeachse (bei z bzw. 16; 38) erstrecken.

4. Kopfstütze nach einem der vorangehenden Ansprüche, dadurch gekennzeichnet, daß die jeweilige Kupplungsfläche (PK; SK) einstückig mit dem Primärteil (P) und/oder dem Sekundärteil (S) verbunden ist.

5. Kopfstütze nach einem der vorangehenden Ansprüche, dadurch gekennzeichnet, daß den Kupplungsflächen (PK, SK) ein gesondertes Kupplungsteil (36) hinzugefügt ist, welches drehfest am Primärteil (P) oder am Sekundärteil (S) gehalten (bei 37) oder befestigt sein kann.

6. Kopfstütze nach einem der vorangehenden Ansprüche, dadurch gekennzeichnet, daß die Kupplungsflächen (PK, SK; PK', SK') zumindest im wesentlichen reibschlüssig wirken.

7. Kopfstütze nach einem der Ansprüche 1-6, dadurch gekennzeichnet, daß die Kupplungsflächen (PK, SK; PK', SK') zumindest im wesentlichen formschlüssig wirken.

8. Kopfstütze nach Anspruch 7, dadurch gekennzeichnet, daß zur formschlüssigen Kupplung zwei korrespondierend im wesentlichen radialverzahnte Kupplungsscheiben (43; 25, 57) etwa nach Art einer Hirth-Verzahnung ineinandergreifen.

9. Kopfstütze nach einem der vorangehenden Ansprüche, dadurch gekennzeichnet, daß die Kupplungsscheiben (43) in Axialrichtung elastisch nachgiebig sind.

10. Kopfstütze nach Anspruch 9, dadurch gekennzeichnet, daß die Nachgiebigkeit zwischen den beiden Kupplungsscheiben (43) durch mindestens ein gesondertes Federbauteil oder durch werkstoffbedingte Federelastizität mindestens einer der Kupplungsscheiben (43) gebildet ist.

11. Kopfstütze nach Anspruch 10, dadurch gekennzeichnet, daß mindestens eine Kupplungsscheibe (43) aus einer gewellten Ringscheibe aus Federstahl-Blech mit sich radial erstreckenden Wellenscheitellinien besteht.

12. Kopfstütze nach einem der vorangehenden Ansprüche, dadurch gekennzeichnet, daß bei einer koaxialen Anordnung von Primärteil (P), Sekundärteil (S), Neigeachse (bei z; 16, 38) und radial angeordneten Kupplungsflächen (PK, SK; PK', SK') als Kraftaufnahmeelement ein koaxial angeordnetes, Primärteil (P), Sekundärteil (S) und Kupplüngsflächen (PK, SK; PK', SK') axial gegeneinander verspannendes, Verbindungselement, wie Schraube (23), Hülse (61), Niet od.dgl., zur Erzeugung der Normalkraft zwischen den Kupplungsflächen (PK, SK; PK', SK') vorhanden ist.

13. Kopfstütze nach Anspruch 12, dadurch gekennzeichnet, daß das Verbindungselement (23, 61) zentral angeordnet ist.

14. Kopfstütze nach einem der vorangehenden Ansprüche, dadurch gekennzeichnet, daß das Primärteil (P) eine unrunde Außenfläche (29) aufweist, welche von einer korrespondierenden-Gegenfläche (41) des Polsterträgers (11) formschlüssig gehalten ist.

15. Kopfstütze nach Anspruch 14, dadurch gekennzeichnet, daß die an der Tragstange (14) gehaltene Neigeachse (bei z) als Hohlachse (38) mit einer unrunden Innenmantelfläche (40) ausgebildet ist, in welche das eine korrespondierende unrunde Außenmantelfläche (39) aufweisende Sekundärteil (S) formschlüssig in Axialrichtung (entlang z) eingreift, wobei das Sekundärteil (S) gemeinsam mit dem ihm axial vorgelagerten Primärteil (P) von dem axial verspannenden Verbindungselement (23) durchgriffen ist und letzterem (33) ein Widerlager (bei 32) bietet.

16. Kopfstütze nach einem der vorangehenden Ansprüche, dadurch gekennzeichnet, daß das Primärteil (P) oder das Sekundärteil (S) an mindestens einer Seite einer mit einer zentralen Öffnung (24) versehenen Lochscheibe (26) je eine sich an der Lochscheibe (26) abstützende Kupplungsscheibe (56) bilden, von welcher koaxial zu dieser ein die zentrale Öffnung (24) durchsetzender, etwa wellenstumpfartiger Fortsatz (58) ausgeht, auf welchem das die Kupplungsscheibe (56) mit der Normalkraft gegen die Lochscheibe (26) haltende Kraftaufnahmeelement (61) abgestützt ist.

17. Kopfstütze nach Anspruch 16, dadurch gekennzeichnet, daß das Primärteil (P) oder das Sekundärteil (S), beiderseits einer mit einer zentralen Öffnung (24) versehenen Lochscheibe (26) je eine sich an der Lochscheibe (26) abstützende Kupplungsscheibe (56, 57), Basisscheibe (56) und Gegenscheibe 57, bilden, daß von der Basisscheibe (56) koaxial zu dieser ein die zentrale Öffnung (24) und die Gegenscheibe (57) durchsetzender, etwa wellenstumpfartiger Fortsatz (58) ausgeht, auf welchem das die beiden Scheiben (56, 57) mit der Normalkraft gegen die Lochscheibe (25) haltende Kraftaufnahmeelement (61) abgestützt ist.

18. Kopfstütze nach Anspruch 16 oder Anspruch 18, dadurch gekennzeichnet, daß der wellenstumpfartige Fortsatz (58) einstückig mit der Basisscheibe (56) ausgebildet ist.

19. Kopfstütze nach einem der vorangehenden Ansprüche, dadurch gekennzeichnet, daß der wellenstumpfartige Fortsatz (58) ein gesondertes Bauteil bildet, mit welchem die Basisscheibe (56) drehfest verbunden ist.

20. Kopfstütze nach einem der vorangehenden Ansprüche, dadurch gekennzeichnet, daß beide Kupplungsscheiben (56, 57) mittels des wellenstumpfartigen Fortsatzes (58) drehfest miteinander verbunden sind, wobei die Gegenscheibe (57) axial verschieblich (bei 66) auf dem wellenstumpfartigen Fortsatz (58) angeordnet ist.

21. Kopfstütze nach einem der vorangehenden Ansprüche, dadurch gekennzeichnet, daß beide Kupplungsscheiben (56, 57) mittels des Kraftaufnahmelementes (61) axial in Richtung (z) Lochscheibe (25) vorgespannt sind.

22. Kopfstütze nach einem der vorangehenden Ansprüche, dadurch gekennzeichnet, daß das Kraftaufnahmeelement eine zylindrische Hülse (61) ist, welche sich am wellenstumpfartigen Fortsatz (58) in Axialrichtung (z) formschlüssig (bei 60; 71) abstützt.

23. Kopfstütze nach Anspruch 21, dadurch gekennzeichnet, daß die zylindrische Hülse (61) hohlnietartig ausgebildet, in eine Nut, wie z.B. Ringnut (60), des wellenstumpfartigen Fortsatzes (58) hinein verformt (bei 62) und dadurch in Axialrichtung (bei z) festgelegt ist.

24. Kopfstütze nach Anspruch 22, dadurch gekennzeichnet, daß die Hülse (61) mittels eines ihr zur freien Endstirnseite (59) des wellenstumpfartigen Fortsatzes (58) vorgelagerten Sicherungselements, wie in der Nut (60) aufgenommener Seeger-Ring (71) od.dgl., in Axialrichtung (bei z) festgelegt ist.

25. Kopfstütze nach einem der Ansprüche 21 bis 24, dadurch gekennzeichnet, daß sich die zylindrische Hülse (61) mindestens mittelbar, z.B. mittels eines radial nach außen vorstehenden Flansches (63), an der Gegenscheibe (57) abstützt.

26. Kopfstütze nach einem der vorangehenden Ansprüche, dadurch gekennzeichnet, daß zwischen dem Kraftaufnahmeelement (61) und der Gegenscheibe (57) mindestens ein Druckfederelement (64) angeordnet ist.

27. Kopfstütze nach Anspruch 26, dadurch gekennzeichnet, daß das Druckfederelement eine vom wellenstumpfartigen Fortsatz (58) zentral durchsetzte Tellerfeder (64) ist.

28. Kopfstütze nach Anspruch 27, dadurch gekennzeichnet, daß zwischen der Tellerfeder (64) und der Gegenscheibe (57) eine Unterlegscheibe (69) angeordnet ist.

29. Kopfstütze nach einem der vorangehenden Ansprüche, dadurch gekennzeichnet, daß mindestens eine Kupplungsscheibe (57) an ihrer Radialfläche (SK') eine Art Hirth-Verzahnung (68) aufweist, welche mit einer korrespondierenden Verzahnung (67) der anliegenden lochscheibenseitigen Radialfläche (SK') verstellarretierbar verrastend zusammenwirkt.

30. Kopfstütze nach einem der Ansprüche 2 bis 29, dadurch gekennzeichnet, daß die (Kupplungsflächen PK, SK; PK', SK') in separate voneinander distanzierte Bestandteile unterteilt sind, die als Flächenelemente (M) jeweils in derselben Ebene angeordnet sind.

31. Kopfstütze nach Anspruch 30, dadurch gekennzeichnet, daß die Kupplungs-Flächenelemente Kreisringflächen (M) darstellen, welche mittels Kreisringnuten (N) voneinander getrennt sind, wobei Kreisringflächen (M) und Kreisnuten (N) koaxial zur Neigeachse (z) verlaufen.

32. Kopfstütze nach Anspruch 31, dadurch gekennzeichnet, daß Kreisringflächen (M) und Kreisringnuten (N) durchgehend ausgebildet sind.

33. Kopfstütze nach einem der vorangehenden Ansprüche, dadurch gekennzeichnet, daß ein Hemmbauteil (B) als Primärteil von einer Klemmlagerschelle (47) gebildet ist, deren Klemmschenkel (52) unabhängig von einer Befestigung am oder im Polsterträger (11) mittels einer von dem Kraftaufnahmeelement (54) gebildeten Verbindung derart aneinandergehalten sind, daß, bei isoliert im ausgebauten Zustand betrachteter Klemmlagerschelle (47), der Innendurchmesser (F) der schellenseitigen kreiszylindrischen Innenmantelfläche (48) ein bestimmtes Untermaß gegenüber dem Außendurchmesser (G) der das Sekundärteil bildenden, einen kreiszylindrischen Lagerzapfen (16) darstellenden, Neigeachse (bei z) aufweist.

34. Kopfstütze nach Anspruch 33, dadurch gekennzeichnet, daß die Verbindung zwischen den Klemmschenkeln (52) von einer Schraube oder von einem Niet gebildet ist, deren beidendseitige Widerlagerenden sich unmittelbar und ausschließlich an den Klemmschenkeln (52) abstützen.

35. Kopfstütze nach Anspruch 34, dadurch gekennzeichnet, daß die Verbindung zwischen den Klemmschenkeln (52) aus einer innenseitigen, mit den Klemmschenkeln (52) stoffschlüssigen, Werkstoffbrücke (54) besteht.

36. Kopfstütze nach Anspruch 35, dadurch gekennzeichnet, daß die Werkstoffbrücke (54) an den freien Enden der Klemmschenkel (52) im Abstand von der kreiszylindrischen Innenmantelfläche (48) angeordnet ist.

37. Kopfstütze nach Anspruch 35 oder nach Anspruch 36, dadurch gekennzeichnet, daß zwischen den einander zugewandten Innenflächen der Klemmschenkel (54) auf deren gesamter Länge zwischen der kreiszylindrischen Innenmantelfläche (48) und der Werkstoffbrücke (54) ein sich gegebenenfalls zur Werkstoffbrücke (54) hinkeilförmig verjüngender Spalt (55) vorhanden ist.

## Claims

1. Head restraint for motor vehicle seats, having an upholstery carrier (11) which is surrounded by an upholstered head rest and is supported by means of at least one support rod (14), which is held in the back rest of the seat, so as to be adjustably inclined with the aid of an axis of inclination held in a possibly height-adjustable and arrestable manner by the support rod, the upholstery carrier (11) cooperating with an arresting device (H) which arrests the upholstery carrier at least in a friction-locking manner relative to the axis of inclination and has at least one arresting structural member (B), characterized in that the arresting device (H) comprises a structural unit, which may be preassembled on the axis of inclination (at z; 16, 38) and whose at least one arresting structural member (B) is finally adjusted or adjustable in terms of its arresting moment with the aid of a force transducing element (23; 54; 61), the force transducing element (23; 54; 61) being structurally integrated with the arresting structural member (B) and being independent of the form-locking accommodation (at R; at 42) of the arresting structural member (B) in or on the upholstery carrier (11), the arresting device (H) comprising a primary part (P), which is held on the upholstery carrier (11) in a torsion-resistant, e.g. form-locking etc., manner and is inclinable with the upholstery carrier (11), and a secondary part (S), which for said purpose is spatially fixed to the axis of inclination (at z; 16, 38) or is formed in a spatially fixed manner by the axis of inclination (at z; 16, 38), and at least one coupling face of the primary part (P), the primary coupling face (PK; PR'), and at least one coupling face of the secondary part (S), the secondary coupling face (SR; SR'), barring an adjusting or fastening function of the upholstery carrier (11), being held against one another in a friction-locking and possibly also form-locking manner via the force transducing element (23, 54; 61) with a normal force which is or may be set at a fixed value.

2. Head restraint according to claim 1, characterized in that primary part (P), secondary part (S) and axis of inclination (at z; 16, 38), together with the associated coupling faces (PR, SR; PK', SR'), are disposed coaxially relative to one another.

3. Head restraint according to one of the preceding claims, characterized in that the coupling faces (PR, SR; PR', SR') extend substantially radially relative to the axis of inclination (at z or 16; 38).

4. Head restraint according to one of the preceding claims, characterized in that the coupling face (PR; SR) is integrallyconnected to the primary part (P) and/or the secondary part (S).

5. Head restraint according to one of the preceding claims, characterized in that added to the coupling faces (PK, SK) is a separate coupling part (36), which may be held (at 37) or fastened in a torsion-resistant manner against the primary part (P) or the secondary part (S).

6. Head restraint according to one of the preceding claims, characterized in that the coupling faces (PK, SK; PK', SK') operate at least substantially in a friction-locking manner.

7. Head restraint according to one of claims 1 to 6, characterized in that the coupling faces (PK, SK; PK', SK') operate at least substantially in a form-locking manner.

8. Head restraint according to claim 7, characterized in that, for form-locking coupling, two correspondingly substantially radially notched coupling disks (43; 25, 57) mesh one in the other in the manner of Hirth-type serrations.

9. Head restraint according to one of the preceding claims, characterized in that the coupling disks (43) are elasticall resilient in an axial direction.

10. Head restraint according to claim 9, characterized in that the resilience between the two coupling disks (43) is formed by at least one separate spring structural member or by material-related spring elasticity'of at least one of the coupling disks (43).

11. Head restraint according to claim 10, characterized in that at least one coupling disk (43) comprises a corrugated ring wheel made of sheet spring steel having radially extending wave crest lines.

12. Head restraint according to one of the preceding claims, characterized in that, given a coaxial arrangement of primary part (P), secondary part (S), axis of inclination (at z; 16, 38) and radially disposed coupling faces (PK, SR; PK', SK'), there is provided as a force transducing element for generating the normal force between the coupling faces (PK, SK; PK', SR') a coaxially disposed connection element, such as screw (23), sleeve (61), rivet or the like, which braces primary part (P), secondary part (S) and coupling faces (PK, SK; PK', SK') axially towards one another.

13. Head restraint according to claim 12, characterized in that the connection element (23, 61) is centrally disposed.

14. Head restraint according to one of the preceding claims, characterized in that the primary part (P) has a non-circular external surface (29) which is form-lockingly held by a corresponding opposing surface (41) of the upholstery carrier (11).

15. Head restraint according to claim 14, characterized in that the axis of inclination (at z) held on the support rod (14) takes the form of a hollow axle (38) with a non-circular internal surface area (40), into which the secondary part (S) having a corresponding non-circular external surface area (39) engages form-lockingly in an axial direction (along z), with the secondary part (S), together with the primary part (P) supported axially in front of it, being penetrated by the axially bracing connection element (23) and offering the latter (33) an abutment (at 32).

16. Head restraint according to one of the preceding claims, characterized in that the primary part (P) or the secondary part (S), on at least one side of a holed disk (26) provided with a central opening (24), form a coupling disk (56), which is supported on the holed disk (26) and emanating coaxially from which is a shaft-end-like extension (58), which penetrates the central opening (24) and on which is supported the force transducing element (61) which holds the coupling disk (56) with the normal force against the holed disk (26).

17. Head restraint according to claim 16, characterized in that the primary part (P) or the secondary part (S), on either side of a holed disk (26) provided with a central opening (24), form a coupling disk (56, 57) supported on the holed disk (26), namely base disk (56) and opposing disk (57), that emanating coaxially from the base disk (56) is an approximately shaft-end-like extension (58), which penetrates the central opening (24) and the opposing disk (57) and on which is supported the force transducing element (61) which holds the two disks (56, 57) with the normal force against the holed disk (25).

18. Head restraint according to claim 16 or claim 18, characterized in that the shaft-end-like extension (58) is constructed as an integral part of the base disk (56).

19. Head restraint according to one of the preceding claims, characterized in that the shaft-end-like extension (58) forms a separate structural member, to which the base disk (56) is connected in a torsion-resistant manner.

20. Head restraint according to one of the preceding claims, characterized in that the two coupling disks (56, 57) are connected to one another in a torsion-resistant manner with the aid of the shaft-end-like extension (58), the opposing disk (57) being disposed axially displaceably (at 66) on the shaft-end-like extension (58).

21. Head restraint according to one of the preceding claims, characterized in that the two coupling disks (56, 57) are prestressed with the aid of the force transducing element (61) axially in the direction (z) of the holed disk (25).

22. Head restraint according to one of the preceding claims, characterized in that the force transducing element is a cylindrical sleeve (61) which is supported in an axial direction (z) form-lockingly (at 60; 71) on the shaft-end-like extension (58).

23. Head restraint according to claim 21, characterized in that the cylindrical sleeve (61) takes the form of a tubular rivet, is deformed (at 62) into a groove, such as, for example, annular groove (60), of the shaft-end-like extension (58) and is thereby fixed in an axial direction (at z).

24. Head restraint according to claim 22, characterized in that the sleeve (61) is fixed in an axial direction (at z) with the aid of a locking element supported in front of it towards the free end face (59) of the shaft-end-like extension (58), such as a Seeger circlip ring (71) or the like accommodated in the groove (60).

25. Head restraint according to one of claims 21 to 24, characterized in that the cylindrical sleeve (61) is supported at least indirectly, e.g. with the aid of a radially outwardly projecting flange (63), on the opposing disk (57).

26. Head restraint according to one of the preceding claims, characterized in that at least one pressure spring element (64) is disposed between the force transducing element (61) and the opposing disk (57).

27. Head restraint according to claim 26, characterized in that the pressure spring element is a cup spring (64) centrally penetrated by the shaft-end-like extension (58).

28. Head restraint according to claim 27, characterized in that a washer (69) is disposed between the cup spring (64) and the opposing disk (57).

29. Head restraint according to one of the preceding claims, characterized in that at least one coupling disk (57) has on its radial surface (SK') Hirth-type serrations (68) which cooperate, by interlocking in an adjustment-arrestable manner, with corresponding notches (67) of the adjacent radial surface (SK') of the holed disk.

30. Head restraint according to one of claims 2 to 29, characterized in that the (coupling faces PK, SK; PK', SK') are divided into separate, spaced-apart components which, as surface elements (M), are each disposed in the same plane.

31. Head restraint according to claim 30, characterized in that the coupling surface elements are circular ring surfaces (M) which are separated from one another by circular ring grooves (N), with circular ring surfaces (M) and circular grooves (N) extending coaxially relative to the axis of inclination (z).

32. Head restraint according to claim 31, characterized in that circular ring surfaces (M) and circular ring grooves (N) are continuous.

33. Head restraint according to one of the preceding claims, characterized in that an arresting structural member (B) as a primary part is formed by a clamping bearing clip (47) whose clamping limbs (52), independently of a fastening on or in the upholstery carrier (11), are held by a connection formed by the force transducing element (54) against one another in such a way that, when the clamping bearing clip (47) is viewed on its own in the disassembled state, the internal diameter (F) of the circular-cylindrical internal surface area (48) of the clip is a specific amount smaller than the external diameter (G) of the axis of inclination (at z) forming the secondary part and constituting a circular-cylindrical bearing journal (16).

34. Head restraint according to claim 33, characterized in that the connection between the clamping limbs (52) is formed by a screw or by a rivet, whose abutment ends at both ends are supported directly and exclusively on the clamping limbs (52).

35. Head restraint according to claim 34, characterized in that the connection between the clamping limbs (52) comprises a material bridge (54) substance-locked on the inside with the clamping limbs (52).

36. Head restraint according to claim 35, characterized in that the material bridge (54) is disposed at the free ends of the clamping limbs (52) at a distance from the circular-cylindrical internal surface area (48).

37. Head restraint according to claim 35 or claim 36, characterized in that a gap (55) possibly tapering in a wedge-like manner towards the material bridge (54) is provided between the opposing inner surfaces of the clamping limbs (54) along their entire length between the circular-cylindrical internal surface area (48) and the material bridge (54).

## Revendications

1. Appuie-tête pour sièges de véhicules automobiles, comprenant un support de rembourrage (11) entouré d'un rembourrage, qui est monté réglable en inclinaison à l'aide d'au moins une tige porteuse (14) fixée au dossier du siège, à l'aide d'un axe d'inclinaison porté par la tige porteuse de façon éventuellement réglable en hauteur et blocable, le support de rembourrage (11) coopérant avec un dispositif de blocage (H) qui le bloque par rapport à l'axe d'inclinaison, du moins par une liaison opérant par friction, ce dispositif présentant au moins un composant de blocage (B),
caractérisé en ce que le dispositif de blocage (H) est composé d'une unité pouvant être prémontée sur l'axe d'inclinaison (en z ; 16, 38), dont au moins un composant de blocage (B) est réglé définitivement ou peut être réglé définitivement, sous l'aspect de son couple de blocage, au moyen d'un élément de réaction de force (23 ; 54 ; 61), l'élément de réaction de force (23 ; 54 ; 61) étant intégré par construction au composant de blocage (B) et étant indépendant du montage par sûreté de forme (en R ; 42) du composant de blocage (B) dans ou sur le support de rembourrage (11), le dispositif de blocage (H) comprenant une partie primaire (P) fixée solidairement en rotation au support de rembourrage (11), par exemple par sûreté de forme ou équivalent, au support de rembourrage (11), et mobile en inclinaison avec le support de rembourrage (11), et une partie secondaire (S), rendue solidaire de l'axe d'inclinaison (en z ; 16, 38) dans l'espace ou formée solidairement dans l'espace par l'axe d'inclinaison (en z ; 16, 38) à cet effet, au moins une surface d'accouplement de la partie primaire (P), la surface d'accouplement primaire (PK ; PK'), et au moins une surface d'accouplement de la partie secondaire (S), la surface d'accouplement secondaire (Sk ; Sk') étant maintenues fixes l'une par rapport à l'autre, par friction et éventuellement également par sûreté de forme, sauf pour la fonction de réglage ou de fixation du support de rembourrage (11), avec une force normale qui est réglable ou réglée sur une valeur fixe au moyen de l'élément de réaction de force (23, 54 ; 61).

2. Appuie-tête selon la revendication 1,
caractérisé en ce que la partie primaire (P), la partie secondaire (S) et l'axe d'inclinaison (en z; 16, 38), ainsi que les surfaces d'accouplement correspondantes (PK, SK ; PK', SK') sont disposés coaxialement entre eux.

3. Appuie-tête selon une des revendications précédentes,
caractérisé en ce que les surfaces d'accouplement (PK, SK ; PK', SK') s'étendent sensiblement radialement par rapport à l'axe d'inclinaison (en z ou 16 ; 38).

4. Appuie-tête selon une des revendications précédentes,
caractérisé en ce que la surface d'accouplement (PK ; SK) est reliée en une seule pièce avec la partie primaire (P) et/ou avec la partie secondaire (S).

5. Appuie-tête selon une des revendications précédentes,
caractérisé en ce qu'aux surfaces d'accouplement (PK, SK) est ajoutée une partie d'accouplement distincte (36) qui est retenue (en 37) ou fixée solidairement en rotation sur la partie primaire (P) ou sur la partie secondaire (S).

6. Appuie-tête selon une des revendications précédentes,
caractérisé en ce que les surfaces d'accouplement (PK, SK ; PK', SK') agissent au moins essentiellement par friction.

7. Appuie-tête selon une des revendications 1 à 6,
caractérisé en ce que les surfaces d'accouplement (PK, SK ; PK', SK') agissent au moins sensiblement par sûreté de forme.

8. Appuie-tête selon la revendication 7,
caractérisé en ce que, pour l'accouplement par sûreté de forme, deux disques d'accouplement (43 ; 25, 57) munis de dentures sensiblement radiales correspondantes, sont en prise entre eux à la façon d'une denture de Hirth.

9. Appuie-tête selon une des revendications précédentes,
caractérisé en ce que les disques d'accouplement (43) peuvent céder élastiquement sous l'effort dans la direction axiale.

10. Appuie-tête selon la revendication 9,
caractérisé en ce que l'aptitude à céder entre les deux disques d'accouplement (43) est assurée par au moins un composant élastique distinct, ou par l'élasticité de la matière d'au moins un des disques d'accouplement (43).

11. Appuie-tête selon la revendication 10,
caractérisé en ce qu'au moins un disque d'accouplement (43) est composé d'un disque annulaire ondulé en tôle d'acier à ressorts présentant des lignes de crêtes d'onde qui s'étendent radialement.

12. Appuie-tête selon une des revendications précédentes,
caractérisé en ce que, dans le cas d'une disposition coaxiale de la partie primaire (P), de la partie secondaire (S), de l'axe d'inclinaison (en z ; 16, 38) et des surfaces d'accouplement radiales (PK, SK ; PK', SK'), il est prévu, comme élément de réaction de force, un élément de liaison disposé coaxialement, qui presse axialement la partie primaire (P), la partie secondaire (S) et les surfaces d'accouplement (PK, SK. ; PK', SK') les unes contre les autres, par exemple une vis (23), un manchon (61), un rivet ou équivalent, pour engendrer la force normale entre les surfaces d'accouplement (PK, SK ; PK', SK').

13. Appuie-tête selon la revendication 12,
caractérisé en ce que l'élément de liaison (23, 61) est disposé en position centrale.

14. Appuie-tête selon une des revendications précédentes,
caractérisé en ce que la partie primaire (P) présente une surface extérieure (29) non circulaire qui est tenue par une liaison par sûreté de forme, par une contre-surface correspondante (41) du support de rembourrage (11).

15. Appuie-tête selon la revendication 14, caractérisé en ce que l'axe d'inclinaison tenu sur la tige porteuse (14) est formé (en z) par un axe creux (38) possédant une surface latérale intérieure (40) non circulaire, dans laquelle est engagée axialement (selon z) et par sûreté de forme la partie secondaire (S) qui présente une surface latérale extérieure non circulaire correspondante (39), la partie secondaire (S) étant traversée, avec la partie primaire (P) qui est située en avant, dans la direction axiale, par l'élément de liaison (23) exerçant une pression axiale, et formant une butée (en 32) pour ce dernier (33).

16. Appuie-tête selon une des revendications précédentes,
caractérisé en ce que la partie primaire (P) ou la partie secondaire (S) forme, au moins d'un côté d'un disque percé (26) muni d'une ouverture centrale (24), un disque d'accouplement (56) qui prend appui contre le disque percé (26), et d'où part, coaxialement à ce disque, un prolongement (58) à peu près en forme de bout d'arbre, qui traverse l'ouverture centrale (24) et sur lequel prend appui l'élément de réaction de force (61) qui retient le disque d'accouplement (56) contre le disque percé (26) avec la force normale.

17. Appuie-tête selon la revendication 16,
caractérisé en ce que la partie primaire (P) ou la partie secondaire (S) forme chacune, de chaque côté d'un disque percé (26) muni d'une ouverture centrale (24), un disque d'accouplement (56, 57), un disque de base (56) ou contre-disque (57), qui s'appuie contre le disque percé (26), en ce que, sur le disque de base (56), s'élève coaxialement à ce disque, un prolongement (58) à peu près en forme de bout d'arbre, qui traverse l'ouverture centrale (24) et le contre-disque (57), sur lequel prend appui l'élément de réaction de force (61), qui maintient les deux disques (56, 57) contre le disque perforé (25) avec la force normale.

18. Appuie-tête selon la revendication 16 ou la revendication 17,
caractérisé en ce que le prolongement (58) en forme de bout d'arbre est formé en une seule pièce avec le disque de base (56).

19. Appuie-tête selon une des revendications précédentes,
caractérisé en ce que le prolongement (58) en forme de bout d'arbre forme un composant distinct auquel le disque de base (56) est relié solidairement en rotation.

20. Appuie-tête selon une des revendications précédentes,
caractérisé en ce que les deux disques d'accouplement (56, 57) sont reliés solidairement entre eux au moyen du prolongement (58) en forme de bout d'arbre, le contre-disque (57) étant monté mobile en translation axiale (en 66) sur le prolongement (58) en forme de bout d'arbre.

21. Appuie-tête selon une des revendications précédentes,
caractérisé en ce que les deux disques d'accouplement (56, 57) sont précontraints axialement, en direction (z) du disque percé (25), au moyen de l'élément de réaction de force (61).

22. Appuie-tête selon une des revendications précédentes,
caractérisé en ce que l'élément de réaction de force est un manchon cylindrique (61) qui prend appui par sûreté de forme (en 60 ; 71) dans la direction axiale (z) sur le prolongement en forme de bout d'arbre (58).

23. Appuie-tête selon la revendication 21,
caractérisé en ce que le manchon cylindrique (61) est constitué par un rivet creux, est serti (en 62) dans une gorge, par exemple une gorge annulaire (60), du prolongement en forme de bout d'arbre (58) et est fixé de cette façon dans la direction axiale (en z).

24. Appuie-tête selon la revendication 22,
caractérisé en ce que le manchon (61) est fixé dans la direction axiale (en z) au moyen d'un élément d'arrêt, par exemple par une bague d'arrêt (71) ou équivalent, logée dans la gorge (60), montée devant lui, en direction du côté frontal terminal libre (59) du prolongement (58) en forme de bout d'arbre.

25. Appuie-tête selon une des revendications 21 à 24,
caractérisé en ce que le manchon cylindrique (61) prend appui contre le contre-disque (57), au moins indirectement, par exemple au moyen d'une collerette (63) qui fait saillie radialement vers l'extérieur.

26. Appuie-tête selon une des revendications précédentes,
caractérisé en ce qu'au moins un élément formant ressort de compression (64) est intercalé entre l'élément de réaction de force (61) et le contre-disque (57).

27. Appuie-tête selon la revendication 26,
caractérisé en ce que l'élément élastique de compression est constitué par une rondelle Belleville (64) qui est traversée en position centrale par le prolongement en forme de bout d'arbre (58).

28. Appuie-tête selon la revendication 27,
caractérisé en ce qu'une rondelle intercalaire (69) est interposée entre la rondelle Belleville (64) et le contre-disque (57).

29. Appuie-tête selon une des revendications précédentes,
caractérisé en ce qu'au moins un disque d'accouplement (57) présente sur sa surface radiale (SK') une sorte de denture de Hirth (68) qui coopère avec une denture correspondante (67) de la surface radiale (SK') adjacente, solidaire du disque percé, avec effet de verrouillage et pouvant bloquer le réglage.

30. Appuie-tête selon une des revendications 2 à 29,
caractérisé en ce que les surfaces d'accouplement (PK, SK ; PK', SK') sont subdivisées en composants séparés, espacés les uns des autres, qui sont disposés, par paires, dans le même plan, pour constituer des éléments de surface (M).

31. Appuie-tête selon la revendication 30,
caractérisé en ce que les éléments de surface d'accouplement sont constitués par des surfaces (M) en forme de couronne de cercle, qui sont séparées les unes des autres au moyen de gorges (N) en forme de couronne de cercle, les surfaces (M) en forme de couronne de cercle et les gorges (N) en forme de couronne de cercle s'étendant coaxialement à l'axe d'inclinaison (z).

32. Appuie-tête selon la revendication 31,
caractérisé en ce que les surfaces en couronne de cercle (M) et les gorges en couronne de cercle (N) sont continues.

33. Appuie-tête selon une des revendications précédentes,
caractérisé en ce qu'un composant de blocage (P) est constitué par une partie primaire d'un collier d'articulation à serrage (47) dont les branches de serrage (52) sont maintenues appuyées l'une contre l'autre indépendamment d'une fixation sur ou dans le support de rembourrage (11), par une liaison formée par l'élément de réaction de force (54), en ce que, dans le collier d'articulation à serrage (47) considéré isolément dans l'état démonté, le diamètre intérieur (F) de la surface latérale intérieure (48) cylindrique à base circulaire, côté collier, présente une réduction déterminée par rapport au diamètre extérieur (G) de l'axe d'inclinaison (en z) formant la partie secondaire, et qui est constitué par un tourillon de portée (16) cylindrique à base circulaire.

34. Appuie-tête selon la revendication 33,
caractérisé en ce que la liaison entre les branches de serrage (52) est formée par une vis ou un rivet dont les extrémités de butée situées des deux côtés, s'appuient directement et exclusivement contre les branches de serrage (52).

35. Appuie-tête selon la revendication 34,
caractérisé en ce que la liaison entre les branches de serrage (52) est constituée par un pont de matière (54) intérieur, qui est venu de matière avec les branches de serrage (52).

36. Appuie-tête selon la revendication 35,
caractérisé en ce que le pont de matière (54) est disposé aux extrémités libres des branches de serrage (52) à distance de la surface latérale intérieure (48) cylindrique à base circulaire.

37. Appuie-tête selon la revendication 35 ou selon la revendication 36,
caractérisé en ce qu'une fente (55) qui se rétrécit éventuellement en direction du pont de matière (54) est formée entre les surfaces intérieures des branches de serrage (54) qui sont dirigées l'une vers l'autre, sur toute la longueur de ces branches, entre la surface latérale intérieure (48) cylindrique à base circulaire et le pont de matière (54).
